# EUROPÄISCHE PATENTSCHRIFT

(11) **EP 4 200 480 B1**
(45) Veröffentlichungstag und Bekanntmachung des Hinweises auf die Patenterteilung: **02.10.2024**
(21) Anmeldenummer: 21763310.6
(22) Anmeldetag: 16.08.2021
(51) Int. Cl.: E02F 3/36, E02F 3/32

(54) **DREHVORRICHTUNG**
ROTATING DEVICE
DISPOSITIF DE ROTATION

(30) Priorität: 19.08.2020 DE 102020121740
(43) Veröffentlichungstag der Anmeldung: 28.06.2023
(73) Patentinhaber: Holp GmbH, 71540 Murrhardt (DE)
(72) Erfinder: HOLP, Günter, 71540 Murrhardt (DE)
(74) Vertreter: Pfiz, Thomas
(86) Internationale Anmeldenummer: PCT/EP2021/072690
(87) Internationale Veröffentlichungsnummer: WO 2022/038079

(56) Entgegenhaltungen:
- KR-B1- 101 200 651
- KR-B1- 101 942 689
- SE-B- 464 644

## Beschreibung

Die Erfindung betrifft eine Drehvorrichtung zur Drehpositionierung eines Arbeitsgeräts an einem Ausleger einer Arbeitsmaschine, insbesondere eines Baggers, mit einem mit dem Ausleger verbundenen Anbauteil, einem vorzugsweise unbegrenzt drehbeweglich an dem Anbauteil gelagerten, zum Anbringen des Arbeitsgeräts ausgebildeten Flanschteil und einem Drehantrieb zur Drehbewegung des Flanschteils.

Eine derartige Drehvorrichtung ist aus der WO 2011/128427 A2 bekannt. Dort wird eine Drehdurchführung zur Durchleitung eines Druckmediums über mindestens einen Medienkanal beschrieben. Die Drehvorrichtung kann mit einem innen liegenden Momentgetriebe arbeiten, das eine endlose Drehung des montierten Anbaugeräts ermöglicht.

Überlastungen, unabhängig ob einmalig auftretend oder schleichend durch häufigere geringere Belastungen, können bei Drehvorrichtungen an Arbeitsmaschinen zu einem Lagerversagen führen. Die Folge dieses Versagens sind neben erheblichen Materialschäden unter Umständen auch der unkontrollierte Verlust des Anbaugeräts, was im schlimmsten Fall mit erheblichen Personenschäden verbunden sein kann.

Das Dokument KR 101 942 689 B1 zeigt ein Stoppzahnrad, das mit einem Zahnrad des Schwenkantriebs in Eingriff bringbar ist, um eine Drehbewegung des Schwenkantriebs zu stoppen. Dieser radiale Zahneingriff ist jedoch axial lösbar und kann daher keine Rückhaltefunktion gegen ein Abfallen des Arbeitsgeräts übernehmen.

Die SE 464 644 B beschreibt eine Drehvorrichtung, bei der ein kraftbeaufschlagtes Bremsband ein Schneckenrad durch Kraftschluss abbremst. Eine zusätzliche formschlüssige Sicherung findet nicht statt.

KR 101 200 651 B1 beschreibt eine Drehvorrichtung, bei der eine Stoppereinheit in Verbindung mit einem Zahnelement die Drehbewegung bremsen und das Anbaugerät senkrecht zur Schwerkraftrichtung drehfest sichern kann. Ein Halten des Anbaugerätes gegen Abreißen nach unten findet nicht statt; eine Kraft in diese Richtung vergrößert sogar noch das Spiel zwischen den Zahnelementen.

Ausgehend hiervon liegt der Erfindung die Aufgabe zugrunde, die im Stand der Technik bekannten Vorrichtungen weiter zu verbessern und mit einfachen Mitteln Schäden durch Überlastungen zuverlässig zu verringern oder zu verhindern, ohne den normalen Arbeitsbetrieb zu beeinträchtigen.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, eine zusätzliche Sicherung des Arbeitsgeräts redundante über mechanische Bauteile zu schaffen. Dementsprechend wird erfindungsgemäß eine Sicherungseinrichtung gegen ein ungewolltes Lösen des Flanschteils und ein Abfallen des Arbeitsgeräts vorgeschlagen, welche mindestens ein bei Unterschreiten eines Spiels für die Drehbewegung selbsttätig mit dem Flanschteil mechanisch in Eingriff kommendes Rückhalteelement aufweist. Um auch hohe Kräfte zuverlässig aufnehmen zu können, weist das Rückhaltelement einen das Flanschteil an einer Außenkontur umgreifenden Fanghaken auf.

Auf diese Weise kann ausgehend von einer maschinenfesten Baugruppe der Kraftfluss im Versagensfall umgeleitet werden. Im Normalzustand, bei Aufrechterhaltung des Spiels für die Drehbewegung gegenüber dem mindestens einen Rückhalteelement, wird hingegen die normale Drehbewegung nicht behindert. Dabei kann auch eine bestimmte, punktuelle Überlastung außerhalb der Drehbewegung ermöglicht bzw. erlaubt werden, ohne zusätzliche Risiken einzugehen. Die Sicherungseinrichtung kann dann auch dazu dienen, einen Getriebeschaden bspw. in Form eines Zahnbruchs zu verhindern.

Vorteilhafterweise besitzt das Rückhaltelement einen an dem Anbauteil fixierten Grundkörper, so dass eine maschinenfeste Basis für die Kraftaufnahme im Sicherungsfall geschaffen wird.

Eine weitere vorteilhafte Ausgestaltung sieht vor, dass das Rückhalteelement formschlüssig in eine Kontur des Flanschteils oder ein mit dem Flanschteil fest verbundenes Bauteil eingreift. Letzteres kann zweckmäßig auch durch ein Teil des Drehantriebs, beispielsweise in Form eines Schneckenrads, ausgeführt sein.

Eine weitere Verbesserung sieht vor, dass mehrere Rückhalteelemente im Winkelabstand zueinander um die Drehachse des Flanschteils herum verteilt angeordnet sind. Denkbar ist es auch, ein einzelnes umlaufend wirkendes Rückhalteelement vorzusehen.

Eine selbsttätige Auslösung ohne zusätzliche Steuerungen lässt sich dadurch schaffen, dass das mindestens eine Rückhaltelement bei Unterschreiten des Drehspiels aus einer Freigabestellung in eine die Drehbewegung bremsende Reibstellung gelangt.

In diesem Zusammenhang ist es auch günstig, wenn das mindestens eine Rückhaltelement einen gesondert aufgebrachten Bremsbelag aufweist. Ein solcher Bremsbelag kann auch eine reinigende Wirkung im Bereich der Eingriffsflächen entfalten.

Um eine graduelle Sicherung abhängig von der Belastung zu ermöglichen, ist es von Vorteil, wenn das Flanschteil über Verbindungsmittel axial an dem Drehantrieb gehalten ist, und wenn das mindestens eine Rückhaltelement mit zunehmender Überlastung des Verbindungsmittels zunehmend in Eingriff kommt.

Eine weitere besonders bevorzugte Ausgestaltung sieht vor, dass die Rückhalteelemente zur Einstellung des Drehspiels vorzugsweise über Schraubverbindungen verstellbar angeordnet sind. Damit kann ohne großen Aufwand eine geeignete Abstimmung vorgenommen werden.

Vorteilhafterweise ist der Drehantrieb auf einem Innenlagerring außenliegend angeordnet, so dass auch Vibrationen besser gedämpft werden und eine bessere Dynamik erzielt wird.

In diesem Zusammenhang ist es auch von Vorteil, wenn der Drehantrieb als Schneckengetriebe ausgebildet ist.

Eine weitere bevorzugte Ausführung sieht vor, dass das Rückhalteelement ein mit dem Schneckenrad in Eingriff bringbares Formteil aufweist.

Zu diesem Zweck ist es von besonderem Vorteil, wenn das Schneckenrad eine konkave Umfangskontur aufweist, und wenn das Rückhalteelement mit einer konvex gewölbten Eingriffspartie versehen ist.

Damit im ungünstigsten Fall das austauschbare Formteil, aber nicht das Schneckenrad beschädigt wird, ist es vorteilhaft, wenn das Rückhalteelement durch einen Kunststoffblock oder ggf. durch eine weiche Aluminiumlegierung gebildet ist.

Für eine in mehrerer Hinsicht vorteilhafte Positionierung ist es vorgesehen, dass das Rückhalteelement vorzugsweise an einer von der Arbeitsmaschine abgewandten Seite in ein Getriebegehäuse des Drehantriebs integriert ist.

Um eine sichere Verbindung herzustellen, ist es von Vorteil, wenn das Rückhalteelement über Schrauben an dem Anbauteil abgestützt ist.

Um im Schadensfall auch hohe Belastungen aufnehmen zu können, ist es vorteilhaft, wenn der Kraftfluss zwischen dem Anbauteil und dem Flanschteil im Eingriffszustand des Rückhalteelements bezüglich der Drehachse radial nach außen verlagert wird.

Vorteilhafterweise wird bei Eingriff der Sicherungseinrichtung ein Signal zur Information eines Maschinisten abgegeben. Dadurch kann dieser auch seine Bedienbefehle entsprechend einschränken.

Im Folgenden wird die Erfindung anhand eines in der Zeichnung schematisch dargestellten Ausführungsbeispiels näher erläutert. Es zeigen:
- Fig. 1: einen Bagger mit einem Arbeitsgerät am Baggerausleger und einer Drehvorrichtung dafür in Seitenansicht;
- Fig. 2: eine vergrößerte Schnittdarstellung im Bereich der mit einer mechanischen Sicherungseinrichtung ausgestatteten Drehvorrichtung des Arbeitsgeräts der Fig. 1;
- Fig. 3 und 4: eine weitere Ausführungsform einer Drehvorrichtung mit Sicherungseinrichtung in perspektivischer Ansicht und in einem Axialschnitt;
- Fig. 5: ein Schneckenrad der Drehvorrichtung; und
- Fig. 6: ein mit dem Schneckenrad in Eingriff bringbares Sicherungsteil.

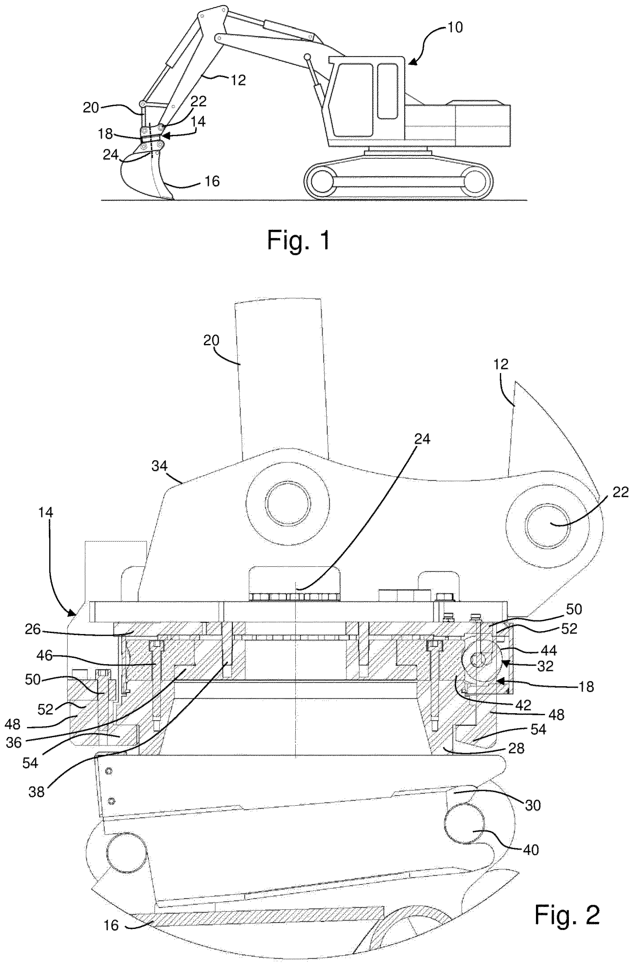

Fig. 1 zeigt einen Bagger 10 als Beispiel einer Arbeitsmaschine mit einem zweiarmigen Stiel bzw. Ausleger 12, einer Drehvorrichtung 14 am freien Ende des Auslegers 12 zur Drehpositionierung einer Baggerschaufel 16 als Arbeitsgerät relativ zu dem Ausleger 12 und einer Sicherungseinrichtung 18 gegen ein ungewolltes Lösen der Baggerschaufel im Bereich der Drehvorrichtung 14.

Eine hydraulische Schwenkkinematik 20 an dem Ausleger 12 ermöglicht ein begrenztes Verschwenken der Baggerschaufel 16 um eine durch das Lagerauge 22 Horizontalachse, während die Drehvorrichtung 14 ein unbegrenztes Drehen der Baggerschaufel 16 um eine Drehachse 24 erlaubt.

Zu diesem Zweck umfasst die Drehvorrichtung 14, wie aus Fig. 2 ersichtlich, eine mit dem Ausleger 12 über die Schwenkkinematik 20 verbundene Anbauplatte 26, einen drehbeweglich an der Anbauplatte 26 gelagerten Flanschring 28 zum Anbringen der Baggerschaufel 16 über eine Schnellwechselvorrichtung 30 und einen Drehantrieb 32 zur Drehbewegung des Flanschrings 28 um die Drehachse 24.

Die Anbauplatte 26 ist an einer Seite mit einem Koppelglied 34 der Schwenckinematik 20 starr verbunden und trägt an der anderen Seite einen Innenlagerring 36, der über ringförmig verteilte Schrauben 38, die einen Radialabstand R1 zur Drehachse 24 besitzen, drehfest gehalten ist.

Die Schnellwechselvorrichtung 30 ist mit dem Flanschring 28 stirnseitig verschweißt und lässt sich über Bolzen 40 mit der Baggerschaufel 16 oder einem anderen Arbeitsgerät mit geringem Handhabungsaufwand koppeln.

Der Drehantrieb 32 ist als Schneckengetriebe ausgebildet und umfasst ein außen gezahntes Schneckenrad 42 und einer motorisch drehbaren schraubenförmigen Schneckenwelle 44, die in die Zahnlücken des Schneckenrads 42 eingreift. Das Schneckenrad 42 ist radial außenliegend auf dem Innenlagerring 36 gelagert und über ringförmig verteilte Schraubverbindungen 46 axial mit dem Flanschring 28 verbunden.

Die Sicherungseinrichtung 18 umfasst mehrere, beispielsweise drei mechanisch wirkende Rückhaltelemente 48, die um die Drehachse 24 herum verteilt sind. In der Fig. 2 ist das rechts gezeigte Rückhalteelement nur zur Sichtbarmachung in die Schnittebene versetzt. Die Rückhaltelemente 48 können auch auf unterschiedliche Weise ausgebildet sein. In jedem Fall weisen die Rückhalteelemente 48 einen an der Anbauplatte 26 oder einem damit verbundenen Teil mittels Schrauben 50 fixierten Grundkörper 52 und einen das Flanschteil 28 an einer zweckmäßig gestuften Außenkontur umgreifenden Fanghaken 54 auf. Im Normalbetrieb erlaubt ein Axialspiel zwischen dem Flanschteil 28 und dem Fanghaken 54 eine ungestörte Drehbewegung. Im Sicherungsfall, bei Unterschreiten des Axialspiels (beispielsweise im Bereich von 1 mm), gelangen die Fanghaken 54 mit dem Flanschteil 28 an dessen Stufenfläche in Eingriff und sorgen für eine die Drehbewegung bremsende Reibung. Dies kann dadurch unterstützt werden, dass die Fanghaken 54 mit einem gesondert aufgebrachten Bremsbelag versehen sind (nicht gezeigt).

Der Übergang aus der normalen Freigabestellung in eine die Drehbewegung bremsende Wirkstellung der Rückhalteelemente 48 kann insbesondere dadurch auftreten, dass die Schrauben 38 und die weiteren Schraubverbindungen 46 unter größerer Belastung noch im elastischen Bereich gedehnt werden, wodurch das endlose Drehen proportional zur Überlastung erschwert bis verhindert wird. Im Versagensfall, bei einem Bruch der Schrauben 38, erfolgt ein Formschluss des Flanschteils 28 mit den Fanghaken 54, so dass ein Abfallen des Arbeitsgeräts 16 und alle damit verbundenen Gefährdungen sicher verhindert wird. In diesem Fall kann auch durch einen nicht gezeigten Signalgeber ein Maschinist über die Gefährdungslage informiert werden.

Das gewünschte Axialspiel für den Sicherungseingriff kann über die Schrauben 50 an dem Grundkörper 52 der Rückhaltelemente 48 eingestellt werden. In der Normalstellung erfolgt der axiale Kraftfluss von der Anbauplatte 26 durch die Drehvorrichtung 32 über die Schrauben 38 und Schraubverbindungen 46. Hingegen wird im Sicherungsfall der Kraftfluss in die außenliegenden Rückhalteelemente 48 verlagert, die im Vergleich zu dem Radius R1 der Schrauben 38 auf einem deutlich größeren Radius liegen und somit auch höhere Belastungsmomente aufnehmen können.

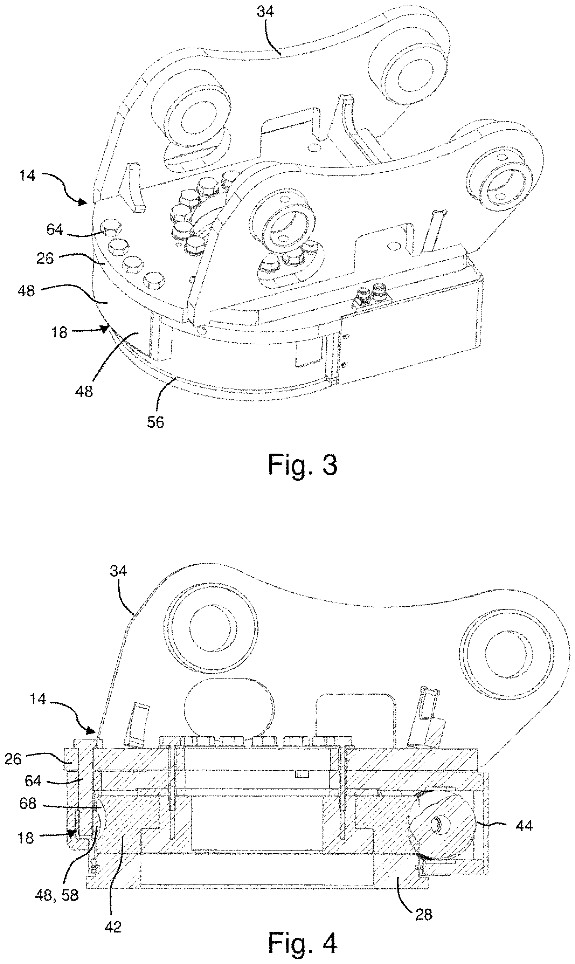

Die Fig. 3 bis 6 zeigen ein weiteres Ausführungsbeispiel einer Drehvorrichtung 14 mit Sicherungseinrichtung 18, wobei gleich oder ähnliche Teile mit denselben Bezugszeichen wie vorstehend erläutert versehen sind.

Die Sicherungseinrichtung 18 umfasst hier ein in das Getriebegehäuse 56 integriertes Rückhalteelement 48, das somit weniger verschmutzungsanfällig ist. Dabei ist eine Anordnung auf der von dem Bagger 10 abgewandten Seite bevorzugt, da dieser Bereich von dem Baggerführer schlechter einsehbar bzw. kontrollierbar ist, während gegenüberliegend Im Sichtfeld zusätzlich auch die oben beschriebenen, eher zu Verschmutzungen neigenden Fanghaken positioniert sein können (nicht gezeigt).

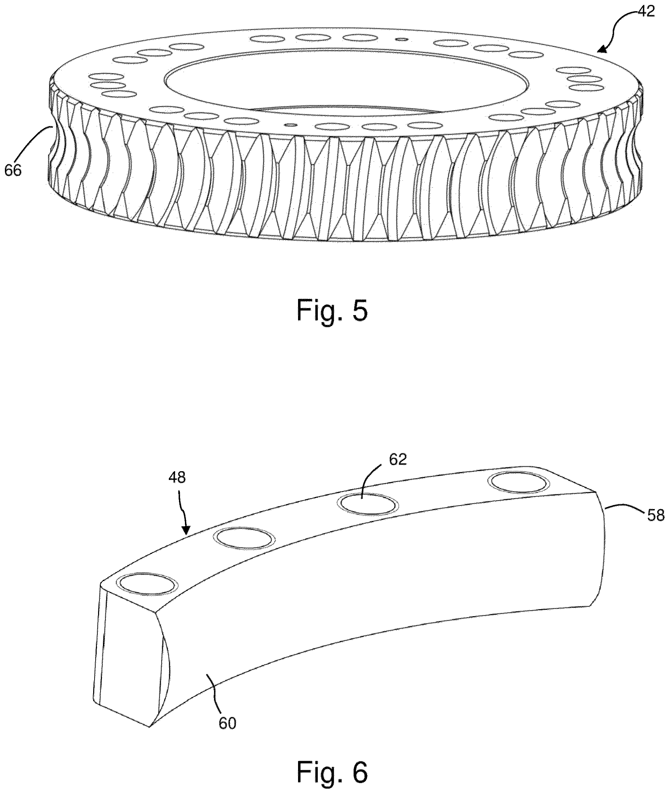

Wie am besten aus Fig. 4 ersichtlich, weist das Rückhalteelement 48 ein mit dem Schneckenrad 42 in Eingriff bringbares Formteil 58 auf. Dieses kann durch einen Kunststoffblock gebildet sein, wie in Fig. 6 dargestellt. Der Kunststoffblock ist mit einer konvex gewölbten Eingriffspartie 60 versehen und besitzt eine Anzahl von Bohrungen 62 für den Einsatz von Halteschrauben 64, die sich an der Anbauplatte 26 abstützen.

Fig. 5 zeigt das umfangsseitig gezahnte Schneckenrad in perspektivischer Ansicht. Daraus ist zu erkennen, dass das Schneckenrad 42 eine konkave Umfangskontur 66 aufweist, in welche die konvex gewölbte Eingriffspartie 60 des Rückhaltelements mit Spiel (Freiraum 68 in Fig. 4) eingreifen kann.

Im Normalbetriebt hat das Schneckenrad 42 genügend Raum, um frei zu drehen. Durch zusätzliche Stellschrauben von außen kann dieses Spiel justiert werden.

Bei elastischer Verformung des gesamten Aufbaus unter Last bewegt sich das Schneckenrad 42 zunehmend nach unten. Dabei verhindert das Formteil 58 zunächst die Möglichkeit des Drehens und hält anschließend im Sicherungsfall das Schneckenrad 42 und das mit ihm verbundene Flanschteil 28 im Gehäuse 56 und an der Anbauplatte 26 fest.

## Patentansprüche

1. Drehvorrichtung zur Drehpositionierung eines Arbeitsgeräts (16) an einem Ausleger (12) einer Arbeitsmaschine (10), insbesondere eines Baggers, mit einem mit dem Ausleger (12) verbundenen Anbauteil (26), einem vorzugsweise unbegrenzt drehbeweglich an dem Anbauteil (26) gelagerten, zum Anbringen des Arbeitsgeräts (16) ausgebildeten Flanschteil (28) und einem Drehantrieb (32) zur Drehbewegung des Flanschteils (28), **gekennzeichnet durch** eine ein ungewolltes Lösen des Flanschteils (28) und ein Abfallen des Arbeitsgeräts (16) verhindernde Sicherungseinrichtung (18), welche mindestens ein bei Unterschreiten eines Spiels für die Drehbewegung mit dem Flanschteil (28) in Eingriff kommendes, einen das Flanschteil (28) an einer Außenkontur umgreifenden Fanghaken (54) aufweisendes Rückhalteelement (48) aufweist.

2. Drehvorrichtung nach Anspruch 1, **dadurch gekennzeichnet, dass** das Rückhalteelement (48) einen an dem Anbauteil (26) fixierten Grundkörper (52) aufweist.

3. Drehvorrichtung nach Anspruch 1 oder 2, **dadurch gekennzeichnet, dass** das Rückhalteelement (48) formschlüssig in ein mit dem Flanschteil (28) fest verbundenes oder an dem Flanschteil (28) ausgebildetes Bauteil eingreift.

4. Drehvorrichtung nach einem der Ansprüche 1 bis 3, **dadurch gekennzeichnet, dass** mehrere Rückhalteelemente (48) im Winkelabstand zueinander um die Drehachse (24) des Flanschteils (28) herum verteilt angeordnet sind.

5. Drehvorrichtung nach einem der Ansprüche 1 bis 4, **dadurch gekennzeichnet, dass** das Rückhalteelement (48) aus einer Freigabestellung in eine die Drehbewegung bremsende Reibstellung gelangt.

6. Drehvorrichtung nach einem der Ansprüche 1 bis 5, **dadurch gekennzeichnet, dass** das Rückhalteelement (48) einen gesondert aufgebrachten Bremsbelag aufweist.

7. Drehvorrichtung nach einem der Ansprüche 1 bis 6, **dadurch gekennzeichnet, dass** das Flanschteil (28) über Verbindungsmittel (46) axial an dem Drehantrieb (32) gehalten ist, und dass das mindestens eine Rückhalteelement (48) mit zunehmender Belastung der Verbindungsmittel (46) zunehmend in Eingriff kommt.

8. Drehvorrichtung nach einem der Ansprüche 1 bis 7, **dadurch gekennzeichnet, dass** das Rückhalteelement (48) zur Einstellung des Spiels vorzugsweise über Schraubverbindungen (50) verstellbar angeordnet ist.

9. Drehvorrichtung nach einem der Ansprüche 1 bis 8, **dadurch gekennzeichnet, dass** der Drehantrieb (32) auf einem Innenlagerring (36) außenliegend angeordnet ist.

10. Drehvorrichtung nach einem der Ansprüche 1 bis 9, **dadurch gekennzeichnet, dass** der Kraftfluss zwischen dem Anbauteil (26) und dem Flanschteil (28) im Eingriffszustand des mindestens einen Rückhalteelements (48) bezüglich der Drehachse (24) radial nach außen verlagert wird.

11. Drehvorrichtung nach der Ansprüche 1 bis 10, **dadurch gekennzeichnet, dass** der Drehantrieb (32) als Schneckengetriebe (42,44) ausgebildet ist, wobei das Schneckengetriebe ein außen gezahntes Schneckenrad (42) umfasst.

12. Drehvorrichtung nach der Ansprüche 1 bis 11, **dadurch gekennzeichnet, dass** das Rückhalteelement (48) vorzugsweise an einer von der Arbeitsmaschine (10) abgewandten Seite in ein Getriebegehäuse des Drehantriebs (32) integriert ist.

13. Drehvorrichtung nach der Ansprüche 1 bis 12, **dadurch gekennzeichnet, dass** das Rückhalteelement (48) über Schrauben an dem Anbauteil (26) abgestützt ist.

14. Drehvorrichtung nach einem der Ansprüche 1 bis 13, **dadurch gekennzeichnet, dass** bei Eingriff des mindestens einen Rückhalteelements (48) der Sicherungseinrichtung (18) ein Signal zur Information eines Maschinisten abgegeben wird.

## Claims

1. Rotating apparatus for rotary positioning of a work tool (16) on a boom (12) of a work machine (10), in particular an excavator, comprising an attachment part (26) connected to the boom (12), a flange part (28) which is preferably mounted on the attachment part (26) so as to rotate without limitation and is designed for mounting the work tool (16), and a rotary drive (32) for the rotary movement of the flange part (28), **characterized by** a safety device (18) which prevents undesired loosening of the flange part (28) and prevents the work tool (16) from falling off, and which has at least one retaining element (48) which comes into engagement with the flange part (28) when a clearance for the rotary movement is not met and has a catch hook (54) which engages around the flange part (28) on an outer contour.

2. Rotating apparatus according to claim 1, **characterized in that** the retaining element (48) has a main body (52) which is fixed to the attachment part (26).

3. Rotating apparatus according to either claim 1 or claim 2,
**characterized in that** the retaining element (48) engages in a form-fitting manner in a component which is rigidly connected to the flange part (28) or formed on the flange part (28).

4. Rotating apparatus according to any of claims 1 to 3,
**characterized in that** a plurality of retaining elements (48) are arranged at an angular distance from one another so as to be distributed around the axis of rotation (24) of the flange part (28).

5. Rotating apparatus according to any of claims 1 to 4,
**characterized in that** the retaining element (48) moves from a release position into a friction position braking the rotary movement.

6. Rotating apparatus according to any of claims 1 to 5, **characterized in that** the retaining element (48) has a separately applied brake pad.

7. Rotating apparatus according to any of claims 1 to 6,
**characterized in that** the flange part (28) is held axially on the rotary drive (32) via connecting means (46), and **in that** the at least one retaining element (48) increasingly engages with increasing load on the connecting means (46).

8. Rotating apparatus according to any of claims 1 to 7,
**characterized in that** the retaining element (48) is arranged so as to be adjustable for setting the clearance, preferably via screw connections (50).

9. Rotating apparatus according to any of claims 1 to 8,
**characterized in that** the rotary drive (32) is arranged externally on an inner bearing ring (36).

10. Rotating apparatus according to any of claims 1 to 9,
**characterized in that** the force flow between the attachment part (26) and the flange part (28) is displaced radially outward with respect to the axis of rotation (24) in the engaged state of the at least one retaining element (48).

11. Rotating apparatus according to claims 1 to 10, **characterized in that** the rotary drive (32) is designed as a worm gear (42, 44), the worm gear having an externally toothed worm wheel (42).

12. Rotating apparatus according to claims 1 to 11, **characterized in that** the retaining element (48) is integrated into a gear housing of the rotary drive (32), preferably on a side facing away from the work machine (10).

13. Rotating apparatus according to claims 1 to 12, **characterized in that** the retaining element (48) is supported on the attachment part (26) via screws.

14. Rotating apparatus according to any of claims 1 to 13,
**characterized in that** a signal is emitted to inform a machine operator when the at least one retaining element (48) of the safety device (18) is engaged.

## Revendications

1. Dispositif de rotation pour le positionnement rotatif d'un appareil de travail (16) sur un bras (12) d'une machine de travail (10), en particulier d'un excavateur, comportant une pièce de montage (26) reliée au bras (12), une pièce de bride (28) montée de préférence avec une mobilité en rotation illimitée sur la pièce de montage (26) et formée pour l'installation de l'appareil de travail (16), et un entraînement rotatif (32) pour le mouvement de rotation de la pièce de bride (28), **caractérisé par** un moyen de blocage (18) empêchant un détachement involontaire de la pièce de bride (28) et une chute de l'appareil de travail (16), lequel moyen de blocage présente au moins un élément de retenue (48) venant en prise avec la pièce de bride (28) lors de la non-atteinte d'un jeu pour le mouvement de rotation et présentant un crochet d'arrêt (54) entourant la pièce de bride (28) sur un contour extérieur.

2. Dispositif de rotation selon la revendication 1, **caractérisé en ce que** l'élément de retenue (48) présente un corps de base (52) fixé sur la pièce de montage (26).

3. Dispositif de rotation selon la revendication 1 ou 2,
**caractérisé en ce que** l'élément de retenue (48) vient en prise par complémentarité de forme dans un composant relié de manière fixe à la pièce de bride (28) ou formé sur la pièce de bride (28).

4. Dispositif de rotation selon l'une des revendications 1 à 3,
**caractérisé en ce que** plusieurs éléments de retenue (48) sont disposés de manière à être répartis à une distance angulaire les uns des autres autour de l'axe de rotation (24) de la pièce de bride (28).

5. Dispositif de rotation selon l'une des revendications 1 à 4,
**caractérisé en ce que** l'élément de retenue (48) passe d'une position de libération à une position de frottement freinant le mouvement de rotation.

6. Dispositif de rotation selon l'une des revendications 1 à 5,
**caractérisé en ce que** l'élément de retenue (48) présente une garniture de frein mise en place séparément.

7. Dispositif de rotation selon l'une des revendications 1 à 6,
**caractérisé en ce que** la pièce de bride (28) est maintenue axialement sur l'entraînement rotatif (32) par l'intermédiaire de moyens de liaison (46), et **en ce que** l'au moins un élément de retenue (48) vient en prise de manière croissante avec une charge croissante des moyens de liaison (46).

8. Dispositif de rotation selon l'une des revendications 1 à 7,
**caractérisé en ce que** l'élément de retenue (48) est disposé de manière à pouvoir être réglé pour le réglage du jeu, de préférence par l'intermédiaire de liaisons par vis (50).

9. Dispositif de rotation selon l'une des revendications 1 à 8,
**caractérisé en ce que** l'entraînement rotatif (32) est disposé à l'extérieur sur une bague de roulement interne (36).

10. Dispositif de rotation selon l'une des revendications 1 à 9,
**caractérisé en ce que** le flux de force entre la pièce de montage (26) et la pièce de bride (28) est déplacé radialement vers l'extérieur par rapport à l'axe de rotation (24) dans l'état de mise en prise de l'au moins un élément de retenue (48).

11. Dispositif de rotation selon les revendications 1 à 10,
**caractérisé en ce que** l'entraînement rotatif (32) est formé en tant qu'engrenage à vis sans fin (42, 44), dans lequel l'engrenage à vis sans fin comprend une roue tangente (42) à denture extérieure.

12. Dispositif de rotation selon les revendications 1 à 11,
**caractérisé en ce que** l'élément de retenue (48) est intégré dans un boîtier d'engrenage de l'entraînement rotatif (32), de préférence sur un côté opposé à la machine de travail (10).

13. Dispositif de rotation selon les revendications 1 à 12,
**caractérisé en ce que** l'élément de retenue (48) est supporté sur la pièce de montage (26) par l'intermédiaire de vis.

14. Dispositif de rotation selon l'une des revendications 1 à 13,
**caractérisé en ce que,** lorsque l'au moins un élément de retenue (48) du moyen de blocage (18) est mis en prise, un signal est émis pour informer un machiniste.
